# DEMANDE DE BREVET EUROPEEN

(11) **EP 0 942 445 A1**
(43) Date de publication de la demande: **15.09.1999**
(21) Numéro de dépôt: 99200674.2
(22) Date de dépôt: 08.03.1999
(51) Int. Cl.: H01H 13/70

(54) **Dispositif de détection de contact,appareil pour mettre en oeuvre un tel dispositif et radiotéléphone comprenant un tel appareil**

(30) Priorité: 13.03.1998 FR 9803142
(71) Demandeur: Koninklijke Philips Electronics N.V., 5621 BA Eindhoven (NL)
(72) Inventeur: Alix, Philippe, 75008 Paris (FR); Boireau, Olivier, 75008 Paris (FR)
(74) Mandataire: Chaffraix, Jean

(57) **Abrégé**

Le dispositif intègre sur une feuille plastique un système de détection de l'action des touches d'un clavier et un système d'éclairage homogène du clavier. Une feuille 10 est pliée en deux parties 11 et 12. Des cloques 13 sont préformées sur la partie supérieure 11 et un circuit de détection 16 est imprimé sur la partie inférieure 12. Des électrodes de contact 15 sont fixées sous chaque cloque 13 pour réaliser un contact électrique avec le circuit de détection 16 lorsque la cloque 13 est enfoncée par l'action d'une touche 22 du clavier 20. Un éclairage des touches du clavier est réalisé par dépôt d'une encre électroluminescente 17 entre les cloques 13 sur une surface plane 18 de la partie supérieure 11 de la feuille plastique 10.
Application : appareils électroniques portables comportant un clavier à touches, radiotéléphones.

## Description

L'invention concerne un dispositif de détection de contact comprenant :
- un premier film isolant formant au moins une cloque ayant une surface interne sur laquelle est déposée une couche d'électrode de contact et une surface externe et
- un deuxième film isolant supportant un circuit de détection pour détecter un contact électrique entre la couche d'électrode de contact et le circuit de détection.

Elle concerne également un appareil de communication d'informations comportant un clavier à touches et un dispositif de détection tel que mentionné ci-dessus, ainsi qu'un tel appareil comportant un écran à cristaux liquides.
Elle concerne enfin un radiotéléphone comportant un appareil du genre mentionné.
Elle s'applique notamment aux radiotéléphones et appareils portables munis de claviers à touches pouvant être utilisés dans des conditions de faible luminosité.

La demande européenne publiée sous le numéro EP 818 793 A1 décrit un dispositif de détection de contact uniformément éclairé constitué d'une membrane supérieure et d'une membrane inférieure. La membrane supérieure est composée d'une feuille de plastique constituée d'une pluralité de couches dont une couche de substance électroluminescente prise en sandwich entre un film transparent et une couche isolante. La membrane est moulée pour former des cloques sur sa surface. Une couche d'électrode de contact est ensuite formée sur la couche isolante, sur la surface interne de la cloque. La membrane inférieure comporte une feuille en matériau isolant sur laquelle est formée une couche d'électrode de contact opposée destinée à réaliser un contact électrique avec la première couche d'électrode de contact.

Un objet de l'invention est de fournir des moyens pour réaliser un dispositif de détection de contact comportant un système d'éclairage intégré dont l'épaisseur, le poids et le coût de fabrication sont inférieurs à ceux du dispositif connu.
Pour cela, il est prévu un dispositif tel que mentionné dans le préambule remarquable en ce qu'une couche de substance électroluminescente est appliquée directement sur ledit premier film, sur une surface plane entourant ladite surface externe.

Contrairement au dispositif connu, la couche de substance électroluminescente n'est pas prise en sandwich dans une membrane (la première membrane) et ensuite moulée dans la masse pour former une cloque. Dans le dispositif selon l'invention, la couche de substance électroluminescente est déposée sur le premier film isolant, autour ou entre les parties externes déjà moulées. L'inconvénient majeur du dispositif connu est en effet la difficulté d'obtenir une cloque par moulage de la membrane sans détruire la substance électroluminescente fragile. Les encres électroluminescentes, sensibles à la chaleur et aux efforts de pression risquent d'être endommagées par un tel traitement. C'est pourquoi l'invention préconise de déposer l'encre électroluminescente sur une surface plane après la formation des cloques.
Selon une caractéristique importante de l'invention, lesdits premier et deuxième films isolants sont formés par une feuille en matière plastique repliée sur elle-même, ladite couche d'électrode de contact venant en regard dudit circuit de détection. Ainsi, les fonctions de détection et d'éclairage du clavier sont totalement intégrées dans un seul composant de faibles épaisseur et poids. Selon un avantage de l'invention, la fabrication du dispositif de détection de clavier peut ainsi être entièrement sous-traitée.
Un autre objet de l'invention est de prévoir un appareil de communication d'informations comportant un clavier à touches et un dispositif de détection tel que mentionné ci-dessus, remarquable en ce que chaque touche est associée à une cloque pour appliquer une force de pression sur ladite surface externe.
Encore un autre objet de l'invention est de fournir un radiotéléphone comportant un tel appareil, caractérisé en ce que ledit clavier comporte des parties en matériau translucide à proximité des touches, pour être éclairées par ladite couche de substance électroluminescente.

La description suivante, faite en regard des dessins ci-annexés, le tout donné à titre d'exemple non limitatif fera bien comprendre comment l'invention peut être réalisée.
La figure 1 représente une vue en coupe d'un dispositif de détection de contact selon l'invention.
La figure 2 représente une vue en coupe d'un appareil de communication d'informations selon l'invention.
La figure 3 représente un radiotéléphone selon l'invention.

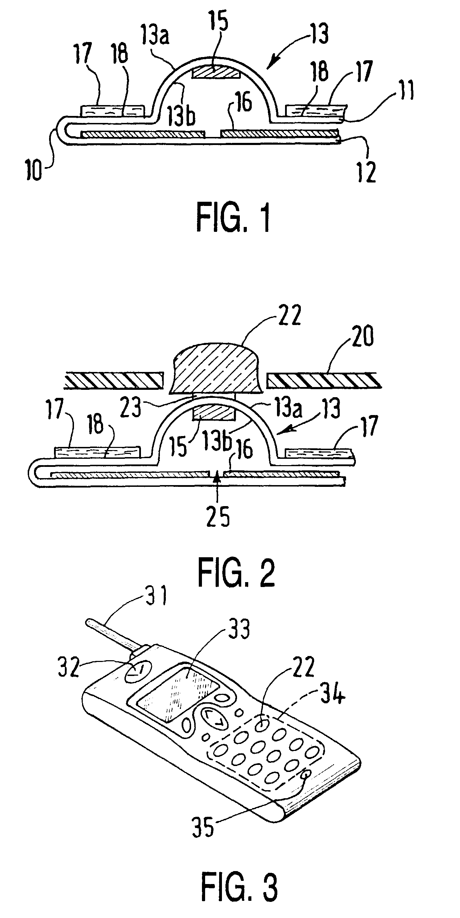

Le dispositif de la figure 1 montre une feuille 10 en matériau plastique isolant, par exemple du polyester, repliée sur elle-même pour former un premier et un deuxième film 11 et 12. Le premier film 11 présente un relief préformé 13 en forme de cloque comportant une surface externe 13a et une surface interne 13b. Une électrode de contact 15, constituée par exemple d'une pastille d'argent, est fixée sur la surface interne 13b de la cloque. Le deuxième film 12 comporte un circuit de détection imprimé 16 destiné à détecter un contact électrique avec l'électrode de contact 15. Une couche de substance électroluminescente 17 est déposée sur le premier film 11, sur une surface plane 18 autour de la surface externe 13a de la cloque 13. Cette couche 17 est constituée d'une encre électroluminescente prise en sandwich entre deux conducteurs de courant électrique. L'encre s'éclaire de façon connue sous l'action du courant.
L'épaisseur de l'ensemble formé par les couches 12, 16, 11 et 17 est de l'ordre de 400 micromètres, la couche électroluminescente ayant une épaisseur de l'ordre de 200 micromètres et les films 11 et 12, une épaisseur voisine de 100 micromètres. La course prévue sous la cloque entre la pastille 15 et le circuit 16 étant limitée à 400 micromètres, l'épaisseur totale du dispositif peut être inférieure à 800 micromètres.

La figure 2 montre une vue en coupe partielle d'un appareil constitué d'un clavier à touches et du dispositif représenté à la figure 1. Le clavier 20 comporte une touche 22 disposée au-dessus de la cloque 13. Un doigt de contact 23 permet d'exercer une force de pression sur la cloque 13 lorsque la touche 22 est enfoncée. La cloque flexible 13 se déforme alors sous la pression du doigt de contact 23 pour réaliser un contact électrique entre l'électrode de contact 15 et le circuit de détection 16 au niveau d'une zone de contact 25. La touche 22 peut être réalisée en matériau translucide ou partiellement translucide de façon à ne pas faire obstacle aux rayons lumineux provenant de la couche électroluminescente 17. Ce système permet un éclairage uniforme de la touche 22.

Le radiotéléphone représenté à la figure 3 est équipé de l'appareil schématisé à la figure 2. Il comporte en outre de façon connue : une antenne 31, un écouteur 32, un écran à cristaux liquides 33, un clavier complet 34 et un microphone 35.
Selon un mode de réalisation particulier de l'invention, la surface du film plastique portant la référence 18 sur les figures 1 et 2, sur laquelle est déposée la couche de substance électroluminescente portant la référence 17 sur ces mêmes figures, s'étend jusque sous l'écran à cristaux liquide 33 de façon à l'éclairer en même temps que les touches du clavier 34. On a ainsi réalisé un module de très faible épaisseur intégrant toutes les fonctions d'éclairage du radiotéléphone et de détection du clavier.

Il va de soi que les exemples décrits et représentés ne sont pas limitatifs et qu'il existe de nombreuses variantes de réalisation de l'invention, celles-ci pouvant être déduites de la présente description sans sortir du cadre de l'invention.

## Revendications

1. Dispositif de détection de contact comprenant :
• un premier film isolant (11) formant au moins une cloque (13) ayant une surface interne (13b) sur laquelle est déposée une couche d'électrode de contact (15) et une surface externe (13a), et
• un deuxième film isolant (12) supportant un circuit de détection (16) pour détecter un contact électrique entre la couche d'électrode de contact (15) et le circuit de détection (16),
caractérisé en ce qu'une couche de substance électroluminescente (17) est appliquée directement sur le premier film (11), sur une surface plane (18) entourant ladite surface externe (13a).

2. Dispositif de détection selon la revendication 1, caractérisé en ce que lesdits premier et deuxième films isolants (11 ; 12) sont formés par une feuille en matière plastique repliée sur elle-même (10), ladite couche d'électrode de contact (15) venant en regard dudit circuit de détection (16).

3. Dispositif de détection selon la revendication 2, caractérisé en ce qu'une pression sur ladite surface externe (13a) provoque une déformation plastique de ladite cloque (13) en vue de réaliser un contact électrique entre ladite couche d'électrode de contact (15) et ledit circuit de détection (16).

4. Appareil de communication d'informations comportant un clavier à touches (20 ; 22) et un dispositif de détection selon l'une des revendications 1 à 3, caractérisé en ce que chaque touche (20) est associée à une cloque (13) pour appliquer une force de pression sur ladite surface externe (13a).

5. Appareil selon la revendication 4 comportant un écran à cristaux liquides (33), caractérisé en ce que ladite surface plane (18) entourant la surface externe (13a) s'étend jusque sous l'écran à cristaux liquides (33).

6. Radiotéléphone comportant un appareil selon l'une des revendications 4 ou 5, caractérisé en ce que ledit clavier (20 ; 22) comporte des parties en matériau translucide à proximité des touches (22), pour être éclairées par ladite couche de substance électroluminescente (17).
